(19) Europäisches Patentamt
European Patent Office
Office européen des brevets

(11) Veröffentlichungsnummer: **0 076 955**
**B1**

(12) # EUROPÄISCHE PATENTSCHRIFT

(45) Veröffentlichungstag der Patentschrift: **27.11.85**

(51) Int. Cl.⁴: **C 08 G 59/14**, C 08 G 59/16, C 09 D 3/58, C 09 D 5/44, C 25 D 13/06

(21) Anmeldenummer: **82108874.7**

(22) Anmeldetag: **25.09.82**

(54) **Verfahren zur Herstellung von oxazolidingruppentragenden modifizierten Epoxidharzen.**

(30) Priorität: **12.10.81 AT 4364/81**
**01.09.82 AT 3273/82**

(43) Veröffentlichungstag der Anmeldung: **20.04.83 Patentblatt 83/16**

(45) Bekanntmachung des Hinweises auf die Patenterteilung: **27.11.85 Patentblatt 85/48**

(84) Benannte Vertragsstaaten: **DE FR GB IT**

(56) Entgegenhaltungen:
**EP - A - 0 028 401**
**DE - A - 2 130 156**
**FR - A - 1 543 690**
**US - A - 3 876 618**

(73) Patentinhaber: **Vianova Kunstharz Aktiengesellschaft, A-8402 Werndorf (AT)**

(72) Erfinder: **Paar, Willibald, Dr., Haberlandtweg 23, A-8045 Graz (AT)**

(74) Vertreter: **Pitter, Robert, Dr. et al, Postfach 191 Leechgasse 21, A-8011 Graz (AT)**

**EP 0 076 955 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von nach vollständiger oder teilweiser Neutralisation mit Säuren wasserverdünnbaren Bindemitteln auf der Basis von oxazolidingruppentragenden modifizierten Epoxidharzen. Die erfindungsgemäss hergestellten Bindemittel sind insbesondere zur Formulierung von kathodisch abscheidbaren Elektrotauchlacken geeignet.

Aus den Europäischen Patentanmeldungen 0 028 401 und 0 028 402 sind KETL-Bindemittel (kathodischer Elektrotauchlack) bekannt, welche als protonisierbare Gruppen ganz oder teilweise Oxazolidingruppen aufweisen. Diese Gruppen werden gemäss diesen Anmeldungen entweder über Urethanbindungen, d.h. über ein Monoaddukt eines N-hydroxyalkyl-oxazolidins und einem Diisocyanat oder über eine Esterbindung mittels eines Dicarbonsäurehalbesters eines N-hydroxyalkyl-oxazolidins in hydroxylgruppentragende Polymere eingeführt.

Bereits in der EP 0 028 402 wird festgestellt, dass eine alleinige Verwendung von Oxazolidingruppen als protonisierbare Gruppen zwar den Vorteil besitzt, dass bereits bei niedrigem Neutralisationsgrad Wasserlöslichkeit erzielt werden kann, jedoch die schwache Basizität der Oxazolidingruppen relativ niedrige pH-Werte der wässrigen Lösungen bedingt. In der genannten Literaturstelle wird daher vorgeschlagen, zusätzliche basische Gruppen durch Reaktion eines Teiles der Epoxidgruppen mit primären und/oder sekundären Aminen oder Halbestern von Dicarbonsäuren und Aminoalkoholen in das Polymere einzuführen.

Es wurde nun gefunden, dass Kombinationen von Oxazolidin- und Aminogruppen in einfacher und eleganter Weise in Epoxidharze eingeführt werden können, wenn man diese mit oxazolidingruppentragenden sekundären Aminen umsetzt.

Solche Amine können durch Reaktion von primären Diaminen mit Monoepoxidverbindungen und Aldehyden bzw. Ketonen erhalten werden. Diese Reaktion ist aus der Literatur bekannt und dient in der pharmazeutischen Industrie zur Herstellung von spezifischen Alkanolaminen, welche z.B. als adrenergische β-Rezeptoren-Blocker Verwendung finden (siehe z.B. FR-PS 1 543 690 oder NL-A 7 214 438).

Ähnliche Oxazolidinamine können durch Umsetzung von Alkylamino-β-hydroxyaminen mit (in bezug auf die Doppelbindung) monofunktionellen Acryl- oder Methacrylverbindungen und anschliessendem Ringschluss mit Aldehyden oder Ketonen hergestellt werden.

Die vorliegende Erfindung betrifft demgemäss ein Verfahren zur Herstellung von nach vollständiger oder partieller Neutralisation mit anorganischen und/oder organischen Säuren wasserverdünnbaren Bindemitteln auf der Basis von modifizierten Epoxidharzen, welches dadurch gekennzeichnet ist, dass man die Epoxidgruppen einer harzartigen Verbindung mit mindestens zwei 1,2-Epoxidgruppen pro Molekül mit einem oder mehreren sekundären Aminen der allgemeinen Formeln

(I) 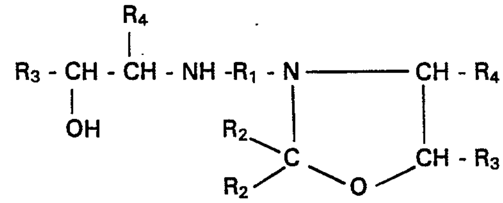

und/oder

(II) 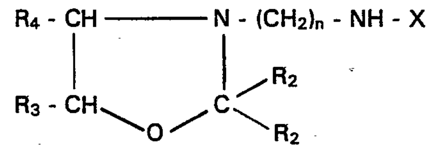

und/oder

(III) 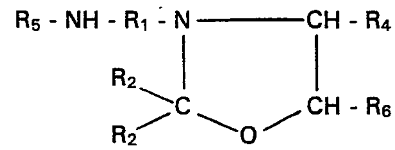

wobei

$R_1$ = einen geradkettigen oder verzweigten oder cyclischen Alkylenrest mit 2 bis 12 C-Atomen oder einen Aralkylenrest,

$R_2$ = einen geradkettigen oder verzweigten Alkylrest mit 1 bis 4 C-Atomen, einen Arylrest oder ein H-Atom oder für beide $R_2$ gemeinsam einen ringbildenden, gegebenenfalls mit Alkyl-, Aryl- oder Alkoxyresten substituierten Alkylenrest,

$R_3$ = einen gesättigten oder ungesättigten, gegebenenfalls Äther- oder Estergruppierungen enthaltenden aliphatischen oder cycloaliphatischen oder aromatischen Kohlenwasserstoffrest,

$R_4$ = H oder $CH_3$-,

n = 2 bis 4,

X entweder

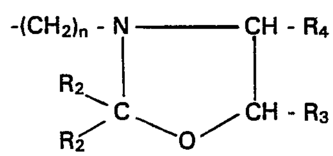

oder

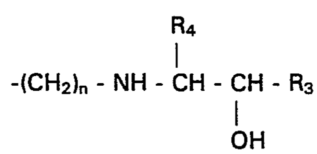

$R_5$ = einen nach Reaktion mit einem aktiven Wasserstoffatom verbleibenden Rest eines in bezug auf die Doppelbindungen monofunktionellen Acryl- oder Methacrylmonomeren und

$R_6$ = ein Wasserstoffatom oder einen Alkylrest bedeutet, sowie gesättigten und/oder ungesättigten Carbonsäuren und gegebenenfalls primären und/oder sekundären Alkyl- und/oder Alkanolaminen in Gegenwart inerter Lösungsmittel bei 60 bis 80°C vollständig umsetzt, wobei die Menge der basischen Komponenten so gewählt wird, dass das Endprodukt eine theoretische Aminzahl von mindestens 35, vorzugsweise von 50 bis 140 mg KOH/g aufweist, und gegebenenfalls die Bindemittel im Anschluss an die Umsetzung des Epoxidharzes mit den Oxazolidingruppen tragenden sekundären Aminen und den übrigen Modifikatoren einer sauren Hydrolyse bei 50 bis 80°C unterwirft.

Durch das erfindungsgemässe Verfahren können in einfacher und übersichtlicher Weise Produkte erhalten werden, welche sowohl als Alleinbindemittel, aber auch aufgrund ihrer guten Pigmentbenetzung zur Herstellung von Pigmentpasten für eine spätere Abmischung mit anderen KETL-Bindemitteln eingesetzt werden können. Gegenüber den bekannten oxazolidingruppentragenden Produkten zeichnen sich die erfindungsgemäss hergestellten Bindemittel durch eine vereinfachte und besser kontrollierbare Herstellung sowie durch die wesentlich erweiterten Möglichkeiten des Einbaus von filmbeeinflussenden Faktoren aus. Die aus diesen Bindemitteln formulierten Lacke zeigen ausgezeichnete applikatorische Eigenschaften, wie günstige Abscheidungsparameter und Umgriff als auch hervorragende Eigenschaften der gehärteten Filme in bezug auf die mechanischen und chemischen Beständigkeiten.

Als harzartige Verbindungen mit mindestens zwei 1,2-Epoxidgruppen, welche in erfindungsgemässer Weise mit den oxazolidingruppentragenden sekundären Aminen umgesetzt werden, kommen insbesonders die bekannten Epoxidharze, welche durch Umsetzung von Bisphenolen, Novolaken, Glykolen etc. mit Epichlorhydrin oder Methylepichlorhydrin erhalten werden. Diese Produkte sind im Handel in einer breiten Palette zugänglich und in vielen Lehrbüchern ausführlich beschrieben. Besonders bevorzugt werden die Produkte auf Basis von Bisphenol A oder Novolaken, welche ein Epoxidäquivalentgewicht zwischen 170 und 1000 aufweisen.

Die erfindungsgemäss eingesetzten sekundären Amine der allgemeinen Formeln

(I) 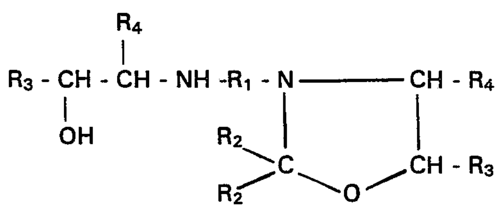

und/oder

(II) 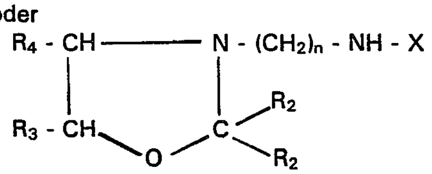

und/oder

(III) 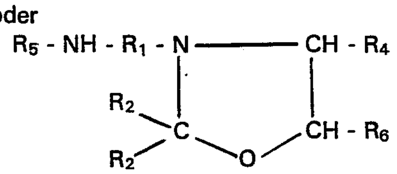

wobei

$R_1$ = einen geradkettigen oder verzweigten oder cyclischen Alkylenrest mit 2 bis 12 C-Atomen oder einen Aralkylenrest,

$R_2$ = einen geradkettigen oder verzweigten Alkylrest mit 1 bis 4 C-Atomen, einen Arylrest oder ein H-Atom oder für beide $R_2$ gemeinsam einen ringbildenden, gegebenenfalls mit Alkyl-, Aryl- oder Alkoxyresten substituierten Alkylenrest,

$R_3$ = einen gesättigten oder ungesättigten, gegebenenfalls Äther- oder Estergruppierungen enthaltenden aliphatischen oder cycloaliphatischen oder aromatischen Kohlenwasserstoffrest,

$R_4$ = H oder $CH_3$- und

n = 2 bis 4,

X entweder

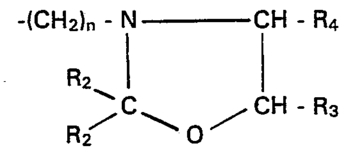

oder

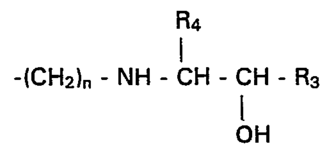

$R_5$ = einen nach Reaktion mit einem aktiven Wasserstoffatom verbleibenden Rest eines in bezug auf die Doppelbindungen monofunktionellen Acryl- oder Methacrylmonomeren und

$R_6$ = ein Wasserstoffatom oder einen Alkylrest bedeutet, stellen niedrigmolekulare Verbindungen dar, welche sowohl eine oder gegebenenfalls zwei sekundäre Aminogruppen als auch mindestens einen substituierten Oxazolidinring aufweisen. Die sekundären Aminogruppen werden mit den Epoxidgruppen des Epoxidharzes unter Ausbildung von tertiären Aminogruppen bei 60 bis 80°C, gegebenenfalls in Anwesenheit inerter organischer Lösungsmittel umgesetzt.

Zur Erzielung einer ausreichenden Wasserverdünnbarkeit wird die Menge aller eingesetzten basischen Komponenten so gewählt, dass das Endprodukt eine theoretische Aminzahl von mindestens 35, vorzugsweise zwischen 50 und 140 mg KOH/g aufweist.

Die sekundären Amine der allgemeinen Formel (I) werden durch Umsetzung eines primären Diamins mit 2 Mol einer Monoepoxidverbindung und nachfolgendem Ringschluss mit Hilfe einer Carbonylverbindung, d.h. eines Aldehyds oder Ketons beispielsweise gemäss folgender Formel erhalten:

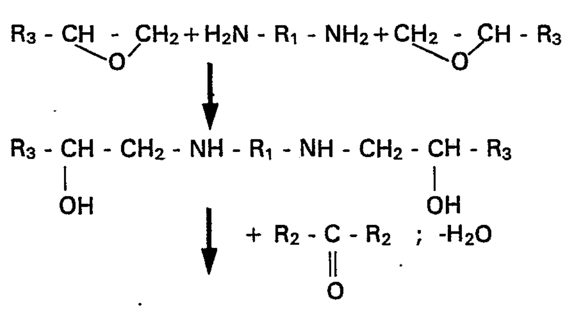

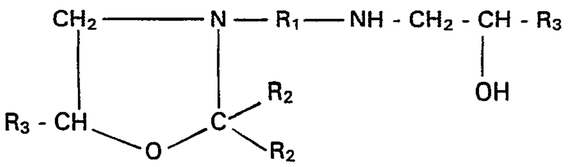

Als primäre Diamine können geradkettige oder verzweigte Alkylendiamine mit 2 bis 12 C-Atomen, wie Äthylendiamin und seine geradkettigen Homologen, verzweigte Homologe wie Neopentyldiamin, cycloaliphatische Diamine, wie Tricyclodecandiamin (= TCD-Diamin = 3(4), 8(9)-Bis-(aminomethyl)-tricyclo-5.2.1.$0^{2,6}$-decan) oder Trimethylcyclopentandiamin, oder Arylalkyldiamine wie Xyloldiamin ($C_6H_4(CH_2NH_2)_2$) eingesetzt werden.

Als Monoepoxidverbindungen können Carbonsäureglycidylester, wie insbesondere Cardura® E (der Glycidylester von verzweigten $C_9$-$C_{11}$-Monocarbonsäuren) oder Glycidylmethacrylat, Glycidyläther wie Butyl-, Phenyl-, p-tert.Butylphenol- oder Allylglycidyläther oder Kohlenwasserstoffoxide wie Olefinoxide ($CH_3$-$(CH_2)_n$-CH - $CH_2$, O), Octylenoxid ($CH_3$-$(CH_2)_4$-CH - CH - $CH_3$, O), Styroloxid oder Cyclohexenvinylmonoxid verwendet werden. Durch die entsprechende Auswahl des an der Glycidylgruppe befindlichen Restes können die Eigenschaften des Endproduktes bezüglich Elastizität, Härte, Vernetzungsdichte etc. wesentlich beeinflusst werden.

Als Carbonylverbindungen, welche zur Ausbildung des Oxazolidinringes dienen, werden aliphatische Aldehyde, vorzugsweise Formaldehyd, aromatische Aldehyde, wie Benzaldehyd oder Ketone wie Methylisobutylketon oder Cyclohexanon eingesetzt.

Die Umsetzung erfolgt in erster Stufe durch Reaktion einer primären Aminogruppe mit 1 Mol der Monoepoxidverbindung. Dabei wird die Monoepoxidverbindung bei 60 bis 120°C dem vorgelegten Amin innerhalb einer Stunde zugegeben. Die anschliessende Reaktion erfolgt bei 70 bis 130°C und ist üblicherweise nach 3 Stunden beendet.

In der 2. Stufe wird das Epoxidaminaddukt mit der Carbonylverbindung bei 80 - 110°C unter Ringschluss umgesetzt, wobei das entstehende Reaktionswasser azeotrop mit Hilfe eines Schleppmittels z.B. einem Benzinkohlenwasserstoff mit einem Siedebereich von 80 - 120°C abgetrennt wird.

Zur Herstellung der sekundären Amine der Formel (II) werden als Ausgangsamine Dialkylentriamine wie Diäthylentriamin oder 3-(2-Aminoäthyl)aminopropylamin eingesetzt. In diesem Fall kann das Epoxidaminaddukt mit 1 bis 2 Mol der Carbonylverbindung umgesetzt werden, sodass Amine mit 1 oder 2 Oxazolidinringen resultieren.

Die sekundären Amine der Formel (III) werden durch Umsetzung von Alkylamino-β-hydroxyaminen mit einer in bezug auf die Doppelbindung monofunktionellen Acryl- oder Methacrylverbindung und nachfolgendem Ringschluss mit Hilfe einer Carbonylverbindung, z.B. eines Aldehyds oder eines Ketons gemäss folgendem Reaktionsschema hergestellt, wobei die verschiedenen Reste R die vorne angegebenen Bedeutungen haben:

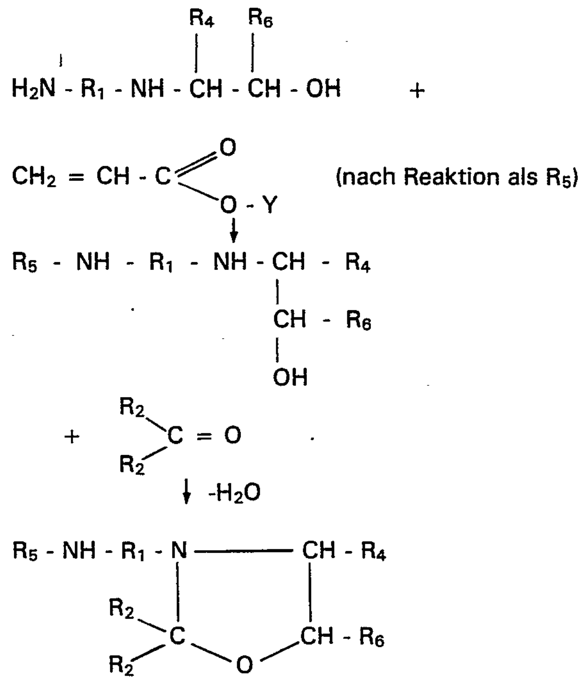


Als Alkylamino-β-hydroxyamine werden vorzugsweise handelsübliche Produkte wie Aminoäthyläthanolamin ($NH_2$-$(CH_2)_2$-NH-$(CH_2)_2$-OH), das Aminopropyläthanolamin oder das Aminoäthylisopropanolamin eingesetzt.

Als Acryl- oder Methacrylmonomere können neben den homologen Estern der Acrylsäure bzw. der Methacrylsäure mit Monoalkoholen auch tertiäre Aminogruppen tragende Monomere, beispielsweise Dimethylaminoäthylacrylat und dessen Homologe oder die homologen Hydroxyalkylacrylate eingesetzt werden.

Als Carbonylverbindungen, welche zur Ausbildung des Oxazolidinringes dienen, werden auch in diesem Fall aliphatische oder aromatische Aldehyde, vorzugsweise Formaldehyd und Benzaldehyd oder Ketone wie Methylisobutylketon oder Cyclohexanon verwendet.

Die Herstellung der erfindungsgemäss eingesetzten Oxazolidinamine der Formel (III) erfolgt in erster Stufe durch langsame Zugabe des Acrylmonomeren zum vorgelegten Amin unter Kühlung bei 30 bis 50°C. Die Umsetzung wird anschliessend bei 70 bis 90°C während 1 bis 3 Stunden vervollständigt. Beim Einsatz von Methacrylmonomeren wird die Temperatur in dieser Phase vorteilhaft auf etwa 140°C gesteigert. Der Ringschluss mit der Carbonylverbindung erfolgt bei 80 bis 115°C, wobei das entstehende Reaktionswasser azeotrop mit Hilfe eines Schleppmittels, z.B. einem Benzinkohlenwasserstoff mit einem Siedebereich von 80 bis 120°C, abgetrennt wird.

Die bei der Einführung der oxazolidingruppentragenden Amine nicht zur Reaktion gelangenden Epoxidgruppen der Di- oder Polyepoxidharze werden mit anderen Verbindungen mit aktiven Wasserstoffatomen, wie Carbonsäuren oder Aminen reagiert. Die zur Verarbeitung als ETL-Bindemittel (Elektrotauchlack) gelangenden Produkte sind praktisch frei von nichtreagierten Epoxidgruppen. Als Carbonsäuren können längerkettige Carbonsäuren, wie gesättigte

oder ungesättigte Ölfettsäuren, aber auch α,β-ungesättigte Monocarbonsäuren, wie (Meth)acrylsäure oder auch Halbester von Dicarbonsäuren mit gesättigten oder ungesättigten Alkoholen oder Hydroxyalkyloxazolidinen oder entsprechende Partialester von Tricarbonsäuren eingesetzt werden. Ähnliche Modifikationen sind auch in der EP 0 028 402 beschrieben. Bei gleichzeitiger Erhöhung des Molekulargewichtes können in untergeordnetem Masse auch aliphatische Dicarbonsäuren herangezogen werden. Bei der Verwendung von primären oder sekundären Aminen muss jedoch die Einhaltung des für die Gesamtaminzahl gegebenen Rahmens sowie Beeinflussungen der Viskosität berücksichtigt werden, da anderenfalls die Abscheidungsparameter zu weitgehend verändert werden.

In einer besonders günstigen Ausführungsform des Verfahrens werden die erfindungsgemäss hergestellten Bindemittel im Anschluss an die Umsetzung des Epoxidharzes mit den Oxazolidingruppen tragenden sekundären Aminen bzw. den übrigen Modifikatoren einer sauren Hydrolyse bei 50 - 80°C unterworfen, wobei die Oxazolidinringe wahrscheinlich zum Teil unter Bildung substituierter Methylolgruppen geöffnet werden. Durch diese Nachbehandlung werden Reaktionen vorweggenommen, welche ansonsten erst im fertigen Lack bzw. im Tauchbad ablaufen. Zu diesem Zweck wird das Reaktionsprodukt mit Wasser und einem Teil der später zur Neutralisation eingesetzten Säure einige Stunden bei der angegebenen Temperatur behandelt.

Die Bindemittel können in bekannter Weise mit Pigmenten vermahlen werden und werden zur Herstellung eines verarbeitungsfertigen Materials nach partieller oder vollständiger Neutralisation mit anorganischen oder organischen Säuren bei pH-Werten zwischen 4 und 7 mit vorzugsweise deionisiertem Wasser bei Verwendung für die Elektrotauchlackierung auf einen Festkörpergehalt zwischen 5 und 20% verdünnt. Die erfindungsgemäss hergestellten Bindemittel zeigen auch bei niedrigen Neutralisationsgraden ausgezeichnete Wasserverdünnbarkeit. Die Verwendung von Zusatz- und Hilfsstoffen sowie die Bedingungen für die Beschichtung eines als Kathode geschalteten Substrats sind dem Fachmann bekannt und bedürfen keiner weiteren Erläuterung. Besonders eignen sich die erfindungsgemäss hergestellten Produkte als Anreibmedien für Pigmente und Füllstoffe. Auch hier sind die Verfahrensweisen dem Fachmann bekannt.

Die nachfolgenden Beispiele sollen die Erfindung erläutern, stellen jedoch keine Beschränkung ihres Umfanges dar. Alle Angaben in Teilen oder Prozenten beziehen sich, soferne nicht anders angegeben, auf Gewichtseinheiten. Alle Angaben in den Tabellen beziehen sich auf Feststoffe.

In den Beispielen werden folgende Abkürzungen verwendet:

| | |
|---|---|
| HMDA | Hexamethylendiamin |
| TCDA | Tricyclodecandiamin |
| IPDA | Isophorondiamin |
| DETA | Diäthylentriamin |
| DEAPA | Diäthylaminopropylamin |
| DMAPA | Dimethylaminopropylamin |
| BA | n-Butylamin |
| MEA | Monoäthanolamin |
| DEA | Diäthylamin |
| AEEA | Aminoäthyläthanolamin |
| APEA | Aminopropyläthanolamin |
| CE | Glycidylester von $C_9$-$C_{11}$Monocarbonsäuren |
| AGE | Allylglycidyläther |
| GMA | Glycidylmethacrylat |
| EPH I | Epoxidharz auf Basis Bisphenol A Epoxidäquivalent ca. 200 |
| EPH II | Epoxidharz auf Basis Bisphenol A Epoxidäquivalent ca. 500 |
| EPH III | Epoxidharz auf Basis eines Phenolnovolaks, Epoxidäquivalent ca. 190 |
| BUAC | Butylacrylat |
| EHA | 2-Äthylhexylacrylat |
| EMA | Äthylmethacrylat |
| HEA | Hydroxyäthylacrylat |
| HEMA | Hydroxyäthylmethacrylat |
| FA | Paraformaldehyd (91%) |
| MIBK | Methylisobutylketon |
| CHX | Cyclohexanon |
| THPA | Tetrahydrophthalsäureanhydrid |
| MA | Maleinsäureanhydrid |
| TMA | Trimellithsäureanhydrid |
| ACS | Acrylsäure |
| MACS | Methacrylsäure |
| PS | Palmitinsäure |
| OS | Ölsäure |
| EGL | Äthylenglykolmonoäthyläther |
| HIPOX | N-2-Hydroxypropyl-5-methyl-oxazolidin |
| HETOX | N-2-Hydroxyäthyloxazolidin |
| AZ | Aminzahl mg KOH/g |
| DBZ | Anzahl der endständigen α,β-ungesättigten Doppelbindungen pro 1000 g Festharz |
| NEUTR | Neutralisation in m Mol Säure pro 100 g Festharz |
| pH | pH-Wert einer 10%igen Lösung bei der angegebenen Neutralisation |
| Vmax | Aufbruchsspannung (Volt) |

*Beispiele 1 bis 16*

Herstellung von Bindemitteln unter Verwendung von sekundären Oxazolidinaminen gemäss Formel (I) und (II).

(A) *Herstellung der oxazolidingruppentragenden sekundären Amine gemäss allgemeiner Formel (I) und (II).*

Die Monoepoxidverbindung wird innerhalb einer Stunde dem in einem geeigneten Reaktionsgefäss vorgelegtem Di- bzw. Triamin bei 60 bis 120°C zugegeben (Phase 1) und anschliessend bei einer Temperatur von 90 - 130°C während 1 - 3 Stunden die Reaktion vervollständigt (Phase 2). Nach Kühlen auf 70 - 80°C wird die Carbonylverbindung und das Kreislaufmittel (Spezialbenzin mit einem Siedebereich zwischen 80 und 120°C oder ein ähnlicher Benzinkohlenwasserstoff) zugegeben und die sich einstellende Kreislauftemperatur solange gehalten, bis die theoretische Wassermenge abgeschieden ist. Anschliessend wird das Kreislaufmittel im Vakuum

abgezogen. Bei Bedarf kann das Reaktionsprodukt zur Verbesserung der Handhabbarkeit mit EGL verdünnt werden. Die Mengenverhältnisse und Bedingungen sind in der TAB 1 zusammengefasst.

*TAB 1*

| OA | Di(Tri)amin Menge (g) | Di(Tri)amin Art | Monoepoxidvbdg. Menge (g) | Monoepoxidvbdg. Art | Reaktionsbedingungen Temp. Phase 1 (°C) | Reaktionsbedingungen Zeit/Temp. (h/°C) | Carbonylvbdg. Menge (g) | Carbonylvbdg. Art |
|---|---|---|---|---|---|---|---|---|
| 1 | 116 | HMDA | 480 | CE | 80-90 | 3/130 | 33 | FA |
| 2 | 194 | TCDA | 228 | AGE | 70-80 | 2/110 | 100 | MIBK |
| 3 | 170 | IPDA | 240<br>142 | CE<br>GMA | 60-70 | 3/100 | 100 | MIBK |
| 4 | 103 | DETA | 480 | CE | 75-85 | 3/130 | 66 | FA |
| 5 | 170 | IPDA | 228 | AGE | 70-80 | 2/110 | 98 | CHX |
| 6 | 103 | DETA | 114<br>142 | AGE<br>GMA | 60-70 | 3/100 | 66 | FA |
| 7 | 116 | HMDA | 240<br>142 | CE<br>GMA | 80-90 | 3/120 | 100 | MIBK |
| 8 | 194 | TCDA | 480 | CE | 80-90 | 3/130 | 98 | CHX |
| 9 | 103 | DETA | 228 | AGE | 70-80 | 3/110 | 200 | MIBK |
| 10 | 170 | IPDA | 284 | GMA | 60-70 | 3/100 | 33 | FA |
| 11 | 103 | DETA | 114<br>240 | AGE<br>CE | 70-80 | 3/120 | 66 | FA |
| 12 | 194 | TCDA | 240<br>142 | CE<br>GMA | 70-80 | 3/110 | 100 | MIBK |
| 13 | 116 | HMDA | 240<br>142 | CE<br>GMA | 70-80 | 3/110 | 33 | FA |

(B) *Zusammenstellung der in den Beispielen zur Modifikation der Epoxidharze neben Monocarbonsäuren herangezogenen Partialester (HE)*

Die Reaktion der in TAB 2 angegebenen Zusammensetzungen wird bei der jeweiligen Reaktionstemperatur bis zur berechneten Säurezahl für den Halbester geführt. Die Umsetzung erfolgt gegebenenfalls in geeigneten Lösungsmitteln wie MIBK oder Diäthylenglykoldimethyläther.

*TAB 2*

| HE | Carbonsäureanhydrid Menge (g) | Carbonsäureanhydrid Art | Alkohol Menge (g) | Alkohol Art | Reaktionstemperatur °C |
|---|---|---|---|---|---|
| 1 | 152 | THPA | 145 | HIPOX | 70 |
| 2 | 98 | MA | 117 | HETOX | 55 |
| 3 | 122<br>38 | THPA<br>TMA | 36<br>105 | HEMA<br>HIPOX | 70 |
| 4 | 152 | THPA | 130 | HEMA | 80 |
| 5 | 152 | THPA | 117 | HETOX | 70 |
| 6 | 98 | MA | 65<br>73 | HEMA<br>HIPOX | 60 |

*Beispiele 1 - 16*

Die in TAB 3 angegebenen Ausgangsmaterialien werden ggf. in EGL gelöst, sodass eine Lösung mit 62-72 Gew.-% Festkörpergehalt resultiert. Der Ansatz wird auf 75°C erwärmt und solange bei dieser Temperatur gehalten bis die Säurezahl unter 3 mg KOH/g gesunken ist. Anschliessend werden die Produkte nach Zusatz von 10 mMol Essigsäure pro 100 g Festharz und Verdünnung mit Wasser auf einen Festkörpergehalt von 60 Gew.-% etwa 3 Stunden bei 50 - 70°C unter Rühren gehalten. Bei Bedarf können die Bindemittel mit Lösungsmitteln, wie Diacetonalkohol oder Glykoläthern vor der Verarbeitung weiterverdünnt werden.

TAB 3

| Beispiel | Epoxidharz | | Oxazolidin-amin | | Modifikatoren: Carbonsäuren | | Modifikatoren: Amine | |
|---|---|---|---|---|---|---|---|---|
| | Menge (g) | Art | Menge (g) | Art | Menge (g) | Art | Menge (g) | Art |
| 1 | 200<br>400 | EPH II<br>EPH III | 353 | OA 2 | 488 | HE 5 | — | — |
| 2 | 450 | EPH III | 528 | OA 4 | 423 | HE 4 | — | — |
| 3 | 200<br>400<br>170 | EPH I<br>EPH II<br>EPH III | 459 | OA 13 | 205<br>86 | PS<br>MACS | — | — |
| 4 | 600<br>250 | EPH II<br>EPH III | 385 | OA 11 | 297<br>50 | HE 1<br>ACS | — | — |
| 5 | 300<br>230 | EPH II<br>EPH III | 120 | OA 1 | 368 | HE 1 | 25 | DEAPA |
| 6 | 100<br>350<br>200 | EPH I<br>EPH II<br>EPH III | 90 | OA 11 | 400 | HE 3 | 30 | DEAPA |
| 7 | 210<br>250 | EPH I<br>EPH III | 157 | OA 7 | 165<br>58 | HE 6<br>ACS | 31 | DMAPA |
| 8 | 400 | EPH III | 158 | OA 8 | 258<br>43 | HE 2<br>MACS | 8 | BA |
| 9 | 240<br>260 | EPH II<br>EPH III | 124 | OA 4 | 342 | HE 5 | 25 | DEAPA |
| 10 | 300<br>220 | EPH I<br>EPH III | 160 | OA 3 | 310<br>180 | HE 4<br>PS | 39 | DEAPA |
| 11 | 300<br>250<br>150 | EPH I<br>EPH II<br>EPH III | 93 | OA 10 | 238<br>43<br>36 | HE 1<br>ACS<br>MACS | 41 | DMAPA |
| 12 | 200<br>200 | EPH I<br>EPH III | 74 | OA 9 | 367 | HE 4 | 39 | DEAPA |
| 13 | 500<br>250 | EPH II<br>EPH III | 77 | OA 6 | 129<br>79 | HE 2<br>MACS | 12 | MEA |
| 14 | 250<br>500 | EPH I<br>EPH II | 99 | OA 12 | 482 | HE 3 | 7 | BA |
| 15 | 200<br>230 | EPH I<br>EPH III | 191 | OA 5 | 326<br>85 | HE 5<br>OS | 20 | DEAPA |
| 16 | 200<br>550 | EPH I<br>EPH II | 628 | OA 8 | 226 | HE 4 | 44 | DEA |

In der TAB 4 sind die Kennzahlen der Produkte gemäss den Beispielen 1 - 16 zusammengefasst.

Die Prüfung der Bindemittel erfolgt bei der Bestimmung der Wasserbeständigkeit durch Beschichtung eines entfetteten, nicht vorbehandelten Stahlblechs mit dem entsprechenden mit Ameisensäure auf den Arbeits-pH eingestellten Klarlack. Für den Salzsprühtest werden die entfetteten, nicht vorbehandelten Stahlbleche mit einem pigmentierten Lack (100 Teile Festharz, 16 Teile Al-Silikatpigment, 2 Teile Russ, 2 Teile Bleisilikat) unter den optimalen Spannungsbedingungen, welche eine Trockenfilmstärke von 16 - 20 µm ergeben, beschichtet und 30 Minuten bei 160°C eingebrannt. Bei der Prüfung der Wasserfestigkeit (Wasserlagerung bei 40°C) zeigen die Beschichtungen nach 380 Stunden Testzeit keine optisch sichtbaren Veränderungen durch Rostangriff oder Bläschenbildung. Beim Salzsprühtest gemäss ASTM B 117.64 zeigen alle Beschichtungen nach einer Testzeit von 340 Stunden einen Kreuzschnittangriff von weniger als 2 mm (Abreissmethode).

TAB 4

| Beispiel | AZ | DBZ | NEUTR. | pH | Vmax |
|---|---|---|---|---|---|
| 1 | 125 | — | 40 | 6,8 | 180 |
| 2 | 104 | 1,07 | 40 | 6,8 | 230 |
| 3 | 66 | 1,25 | 65 | 6,2 | 170 |
| 4 | 120 | 0,44 | 45 | 6,6 | 210 |
| 5 | 108 | — | 20 | 7,0 | 300 |

*TAB 4 (Fortsetzung)*

| Beispiel | AZ | DBZ | NEUTR. | pH | Vmax |
|---|---|---|---|---|---|
| 6 | 95 | 0,32 | 25 | 6,8 | 290 |
| 7 | 102 | 1,63 | 50 | 6,5 | 140 |
| 8 | 119 | 0,58 | 30 | 6,7 | 190 |
| 9 | 128 | — | 20 | 7,3 | 300 |
| 10 | 51 | 1,12 | 60 | 6,0 | 230 |
| 11 | 97 | 1,22 | 45 | 6,3 | 240 |
| 12 | 67 | 1,48 | 55 | 5,9 | 270 |
| 13 | 75 | 1,19 | 50 | 6,1 | 250 |
| 14 | 69 | 0,44 | 60 | 6,4 | 200 |
| 15 | 123 | — | 35 | 7,2 | 260 |
| 16 | 72 | 0,52 | 50 | 6,9 | 240 |

*Beispiele 17 bis 21*

Herstellung von Bindemitteln unter Verwendung von sekundären Oxazolidinaminen gemäss Formel (III).

*Herstellung der oxazolidingruppentragenden sekundären Amine gemäss allgemeiner Formel (III).*

Zum vorgelegten Amin wird unter Kühlen bei 30 bis 35°C das (Meth)acrylmonomere innerhalb einer Stunde zugegeben und die Reaktion während 1 bis 3 Stunden bei 70 bis 90°C (beim Einsatz von Methacrylaten bei ca. 140°C) vervollständigt. Anschliessend wird bei 70 bis 80°C die Carbonylverbindung und das Kreislaufmittel (Spezialbenzin mit einem Siedebereich zwischen 80 und 120°C oder ein ähnlicher Benzinkohlenwasserstoff) zugegeben und die Umsetzung bei 80 bis 115°C unter azeotroper Entfernung des Reaktionswassers durchgeführt. Anschliessend wird das Kreislaufmittel im Vakuum abgezogen. Mengenverhältnisse und Bedingungen sind in der TAB 5 zusammengefasst.

*TAB 5*

| OA | Amin | Acryl monomeres | Reaktions-bed. Stden. / °C | Carbonyl verbindung |
|---|---|---|---|---|
| 14 | 104 AEEA | 128 BUAC | 2 / 70 | 100 MIBK |
| 15 | 104 AEEA | 184 EHA | 1 / 70 | 33 FA |
| 16 | 118 APEA | 114 EMA | 2 / 140 | 98 CHX |
| 17 | 104 AEEA | 116 HEA | 1 / 75 | 33 FA |

*Beispiele 17 bis 21*

Die in TAB 6 angegebenen Ausgangsmaterialien werden gegebenenfalls in EGL gelöst, sodass eine Lösung mit 62 - 72 Gew.-% Festkörpergehalt resultiert. Der Ansatz wird auf 75°C erwärmt und solange bei dieser Temperatur gehalten bis die Säurezahl unter 3 mg KOH/g gesunken ist. Anschliessend werden die Produkte nach Zusatz von 10 mMol Essigsäure pro 100 g Festharz und Verdünnung mit Wasser auf einen Festkörpergehalt von 60 Gew.-% etwa 3 Stunden bei 50 - 70°C unter Rühren gehalten. Bei Bedarf können die Bindemittel mit Lösungsmitteln, wie Diacetonalkohol oder Glykoläthern vor der Verarbeitung weiterverdünnt werden.

*TAB 6*

| Beispiel | Epoxidharz | Oxazolidin-amin (OA) | Modifikatoren | |
|---|---|---|---|---|
| | | | Carbonsäuren | Amine |
| 17 | 300 EPH I<br>500 EPH II | 251 OA 14 | 226 HE 4 | 22 DEA<br>39 DEAPA |
| 18 | 200 EPH I<br>342 EPH III | 150 OA 15 | 505 HE 1 | 32 DMAPA |
| 19 | 400 EPH II<br>304 EPH III | 530 OA 16 | 69 MACS | — |
| 20 | 200 EPH I<br>500 EPH II<br>190 EPH III | 232 OA 17 | 236 HE 6 | 44 DEA<br>21 DMAPA |
| 21 | 456 EPH III | 240 OA 15 | 338 HE 4 | 29 DEA |

In der TAB 7 sind die Kennzahlen der Produkte gemäss den Beispielen 17 - 21 zusammengefasst. Die Prüfung der Bindemittel erfolgte in gleicher Weise wie bei den Beispielen 1 bis 16. Auch bei diesen Produkten zeigen sich bei der Prüfung der Wasserfestigkeit (Wasserlagerung bei 40°C) nach 380 Stunden Testzeit keine optisch sichtbaren Veränderungen durch Rostangriff oder Bläschenbildung. Beim Salzsprühtest gemäss ASTM B 117-64 zeigen alle Beschichtungen nach einer Testzeit von 340 Stunden einen Kreuzschnittangriff von weniger als 2 mm (Abreissmethode).

*TAB 7*

| Beispiel | AZ | DBZ | NEUTR | pH | Vmax |
|---|---|---|---|---|---|
| 17 | 105 | 0,6 | 30 | 6,8 | 290 |
| 18 | 150 | — | 20 | 7,1 | 300 |
| 19 | 146 | 0,6 | 25 | 6,7 | 270 |
| 20 | 138 | 0,35 | 35 | 6,6 | 280 |
| 21 | 105 | — | 45 | 6,3 | 200 |

**Patentansprüche**

1. Verfahren zur Herstellung von nach vollständiger oder partieller Neutralisation mit anorganischen und/oder organischen Säuren wasserverdünnbaren Bindemitteln auf der Basis von modifizierten Epoxidharzen, dadurch gekennzeichnet, dass man die Epoxidgruppen einer harzartigen Verbindung mit mindestens zwei 1,2-Epoxidgruppen pro Molekül mit einem oder mehreren sekundären Aminen der allgemeinen Formeln

(I) 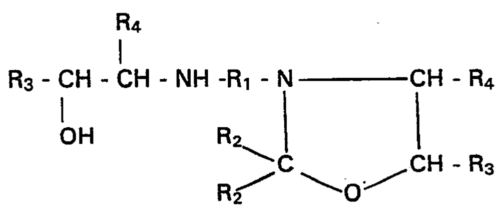

und/oder

(II) 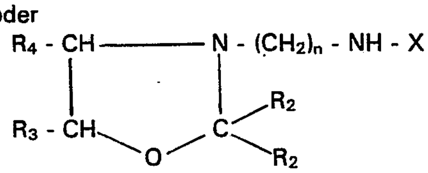

und/oder

(III) 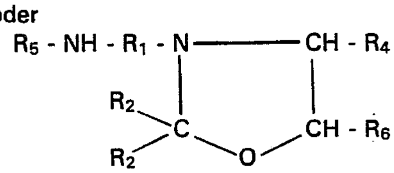

wobei

$R_1$ = einen geradkettigen oder verzweigten oder cyclischen Alkylenrest mit 2 bis 12 C-Atomen oder einen Aralkylenrest,

$R_2$ = einen geradkettigen oder verzweigten Alkylrest mit 1 bis 4 C-Atomen, einen Arylrest oder ein H-Atom oder für beide $R_2$ gemeinsam einen ringbildenden, gegebenenfalls mit Alkyl-, Aryl- oder Alkoxyresten substituierten Alkylenrest,

$R_3$ = einen gesättigten oder ungesättigten, gegebenenfalls Äther- oder Estergruppierungen enthaltenden aliphatischen oder cycloaliphatischen oder aromatischen Kohlenwasserstoffrest,

$R_4$ = H oder $CH_3$-,
n = 2 bis 4 und
X entweder

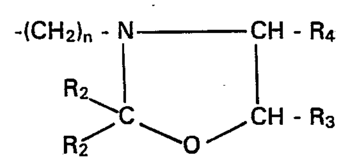

oder

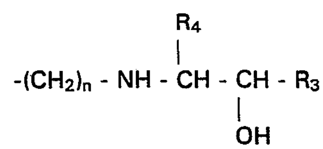

$R_5$ = einen nach Reaktion mit einem aktiven Wasserstoffatom verbleibenden Rest eines in bezug auf die Doppelbindungen monofunktionellen Acryl- oder Methacrylmonomeren und

$R_6$ = ein Wasserstoffatom oder einen Alkylrest bedeutet, sowie gesättigten und/oder ungesättigten Carbonsäuren und gegebenenfalls primären und/oder sekundären Alkyl- und/oder Alkanolaminen in Gegenwart inerter Lösungsmittel bei 60 bis 80°C vollständig umsetzt, wobei die Menge der basischen Komponenten so gewählt wird, dass das Endprodukt eine theoretische Aminzahl von mindestens 35, vorzugsweise von 50 bis 140 KOH/g aufweist, und gegebenenfalls die Bindemittel im Anschluss an die Umsetzung des Epoxidharzes mit den Oxazolidingruppen tragenden sekundären Aminen und den übrigen Modifikatoren einer sauren Hydrolyse bei 50 bis 80°C unterwirft.

2. Verfahren nach Anspruch 1, dadurch gekennzeichnet, dass man als harzartige Verbindungen mit zwei 1,2-Epoxidgruppen Epoxidharze auf Basis von Diphenolen oder Phenolnovolaken mit Epoxidäquivalentgewichten zwischen 170 und 1000 oder Mischungen dieser Harze einsetzt.

3. Verfahren nach den Ansprüchen 1 und 2, dadurch gekennzeichnet, dass man als modifizierende Carbonsäuren Halbester von Dicarbonsäuren mit gesättigten oder ungesättigten Monoalkoholen oder

Hydroxyalkyloxazolidinen oder die entsprechenden Partialester von Tricarbonsäuren einsetzt.

4. Bindemittel, hergestellt entsprechend den Ansprüchen 1 bis 3.

5. Verwendung der gemäss den Ansprüchen 1 bis 3 hergestellten Bindemittel zur Formulierung kathodisch abscheidbarer Lacke.

**Claims**

1. Process for producing binders water soluble upon total or partial neutralisation with inorganic and/or organic acids, on the basis of modified epoxy resins, characterized in that the epoxy groups of a resin-like compound with at least two 1,2-epoxy groups per molecule with one or more secondary amines of the general formula

(I)

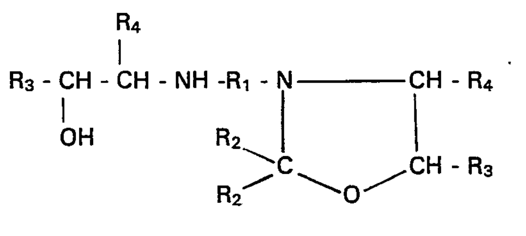

and/or

(II)

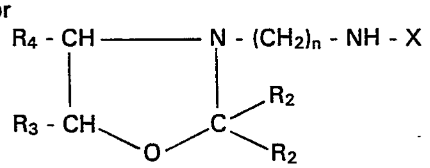

and/or

(III)

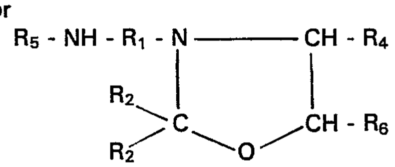

$R_1$ being a straight chain or branched or cyclic alkylene radical with from 2 to 12 C-atoms or an aralkylene radical,

$R_2$ being a straight chain or branched alkyl radical with from 1 to 4 C-atoms or an aryl radical or a hydrogen atom, or, for both $R_2$ jointly a ring-forming alkylene radical optionally substituted with alkyl, aryl or alkoxy radicals,

$R_3$ being a saturated or unsaturated aliphatic or cycloaliphatic or aromatic hydrocarbon radical, optionally carrying ether or ester linkages,

$R_4$ being H or $CH_3$-,

n = 2 - 4,

X being either

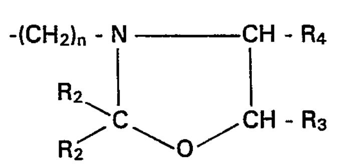

or

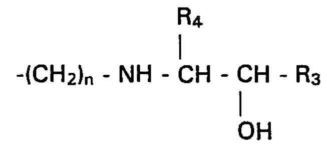

$R_5$ being a radical after reaction with an active hydrogen atom of an acrylic or methacrylic monomer, monofunctional with regard to the double bond and

$R_6$ being a hydrogen atom or an alkyl radical and saturated and/or unsaturated carboxylic acids, and optionally, primary and/or secondary alkyl and/or alkanol amines are reacted completely in the presence of inert solvent at from 60 to 80°C, the quantity of basic compounds being chosen such that the end product has a theoretical amine value of at least 35, preferably of from 50 to 140 mg KOH/g, and that the binders, after the reaction with the epoxy resin, together with the secondary amines carrying oxazolidine groups and the other modifying agents are optionally subjected to acidic hydrolysis at from 50 to 80°C.

2. Process according to claim 1, characterized in that as resin-like compound with two 1,2-epoxy groups epoxy resins are used on the basis of diphenols or phenol novolaks with epoxy equivalent weights of between 170 and 1000 or mixtures of these resins.

3. Process according to claims 1 and 2, characterized in that semi-esters of dicarboxylic acids with saturated or unsaturated monoalcohols or with hydroxyalkyloxazolidines or the corresponding partial esters of tricarboxylic acids are used as modifying carboxylic acids.

4. Binders produced according to claims 1 to 3.

5. Use of the binders produced according to claims 1 to 3 for the formulation of cathodic electrodeposition paints.

**Revendications**

1. Procédé de préparation de liants diluables à l'eau après neutralisation partielle ou complète par des acides minéraux et/ou organiques, à base de résines époxydiques modifiées, caractérisé en ce que l'on fait réagir complètement à une température de 60 à 80°C, en présence de solvants inertes, les groupes époxyde d'un composé résineux portant au moins deux groupes 1,2-époxyde par molécule avec une ou plusieurs amines secondaires de formules générales

(I)

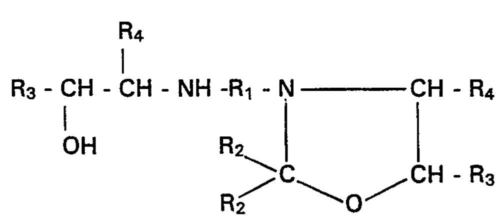

et/ou

(II) 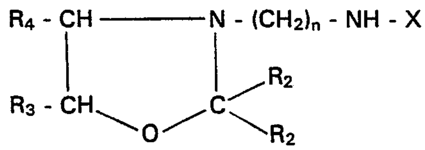

et/ou

(III) 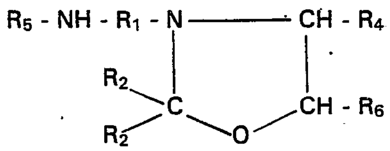

dans lesquelles

$R_1$ est un groupe alkylène à chaîne droite ou ramifiée ou cyclique en C2-C12 ou un groupe aralkylène,

$R_2$ est un groupe alkyle à chaîne droite ou ramifiée en C1-C4, un groupe aryle ou un atome d'hydrogène, ou bien les deux symboles $R_2$ représentent ensemble un groupe alkylène cyclique, éventuellement substitué par des groupes alkyle, aryle ou alcoxy,

$R_3$ est un reste hydrocarboné aliphatique ou cycloaliphatique saturé ou insaturé ou aromatique contenant éventuellement des groupements éthers ou esters,

$R_4$ représente H ou $CH_3$,

n est un nombre de 2 à 4

X représente

ou bien

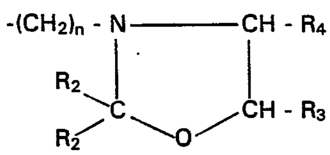

ou

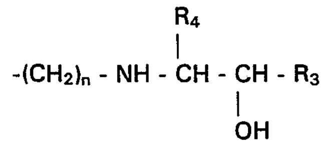

$R_5$ est un reste, subsistant après réaction avec un atome d'hydrogène actif, d'un monomère acrylique ou méthacrylique mono-fonctionnel pour ce qui concerne les doubles liaisons, et

$R_6$ est un atome d'hydrogène ou un groupe alkyle, et des acides carboxyliques saturés et/ou insaturés et le cas échéant des alkyl- et/ou alcanol-amines primaires et/ou secondaires, la quantité des composants basiques étant choisie de manière que le produit final ait un indice d'amine théorique d'au moins 35, de préférence de 50 à 140 mg de KOH/g, et le cas échéant on soumet les liants, après la réaction de la résine époxydique avec les amines secondaires portant des groupes oxazolidine et les autres agents modifiants, à une hydrolyse acide à une température de 50 à 80°C.

2. Procédé selon la revendication 1, caractérisé en ce que l'on utilise en tant que composés résineux contenant deux groupes 1,2-époxydes des résines époxydes à base de diphénols ou de novolaques phénoliques présentant des poids équivalents d'époxyde de 170 à 1.000 ou des mélanges de ces résines.

3. Procédé selon les revendications 1 et 2, caractérisé en ce que l'on utilise en tant qu'acides carboxyliques modifiants des hémi-esters d'acides dicarboxyliques et de mono-alcools saturés ou insaturés ou d'hydroxyalkyloxazolidines ou les esters partiels correspondants d'acides tricarboxyliques.

4. Liants préparés par le procédé selon les revendications 1 à 3.

5. Utilisation des liants préparés selon les revendications 1 à 3 pour la préparation de peintures et vernis aptes à la déposition cathodique.